# EUROPÄISCHE PATENTANMELDUNG

(11) **EP 3 409 472 A1**
(43) Veröffentlichungstag der Anmeldung: **05.12.2018**
(21) Anmeldenummer: 18175285.8
(22) Anmeldetag: 31.05.2018
(51) Int. Cl.: B33Y 80/00, B29C 64/106, B29C 70/78

(54) **VERFAHREN UND WERKZEUG ZUM HERSTELLEN EINES FAHRZEUGINNENVERKLEIDUNGSTEILS SOWIE FAHRZEUGINNENVERKLEIDUNGSTEIL**

(30) Priorität: 02.06.2017 DE 102017209457
(71) Anmelder: Faurecia Innenraum Systeme GmbH, 76767 Hagenbach (DE)
(72) Erfinder: CHAPEAU, Lidia, 76131 Karlsruhe (DE); BASQUIN, Guillaume, 67160 Wissembourg (FR)
(74) Vertreter: Pfenning, Meinig & Partner mbB

(57) **Zusammenfassung**

Die vorliegende Anmeldung betrifft ein Verfahren zur Herstellung eines Fahrzeuginnenverkleidungsteils mit zumindest einem funktionellen und/oder dekorativen Element. Das funktionelle und/oder dekorative Element ist dabei vorzugsweise aus einem thermoplastischen Material additiv gefertigt und weist typischerweise eine strukturierte Oberfläche auf. Außerdem betrifft die vorliegende Anmeldung ein Werkzeug umfassend eine Auftragseinheit und eine Aufnahmevorrichtung mit einer Aufnahmeoberfläche, die gekrümmt oder zumindest teilweise strukturiert ist.

## Beschreibung

Die vorliegende Anmeldung betrifft ein Verfahren zur Herstellung eines Fahrzeuginnenverkleidungsteils mit zumindest einem funktionellen und/oder dekorativen Element. Außerdem betrifft die vorliegende Anmeldung ein Werkzeug zur Herstellung des Fahrzeuginnenverkleidungsteils und das Fahrzeuginnenverkleidungsteil. Das funktionelle und/oder dekorative Element umfasst dabei vorzugsweise ein thermoplastisches Material.

Fahrzeuginnenverkleidungsteile mit thermoplastischen Funktions- oder Dekorelementen werden typischerweise durch Spritzgussverfahren hergestellt. Dies hat jedoch den Nachteil eines kostenintensiven Formenbaus komplexer Spritzgussformen. 3D-Druck-Verfahren ermöglichen hingegen eine Herstellung von nahezu beliebigen Bauteilformen anhand von CAD-Modellen. Die Druckschrift DE 10 2014 011 230 A1 zeigt beispielsweise eine Vorrichtung für eine dreidimensionale additive Druckoperation, insbesondere für großvolumige Bauteile, die mittels FDM (Fused Deposition Modelling; Schmelzschichtung) gedruckt werden. Die bekannten 3D-Druck-Verfahren haben jedoch den Nachteil sehr langer Zykluszeiten. Insbesondere das Herstellen von großen Bauteilen mittels 3D-Druckverfahren impliziert lange Prozesszeiten, die beispielsweise den Anforderungen der Automobilzulieferindustrie, in denen hohe Stückzahlen pro Jahr gefertigt werden, nicht Genüge leisten können.

Ausgehend von diesem Stand der Technik ist es eine Aufgabe der vorliegenden Anmeldung ein verbessertes Verfahren zur Herstellung eines Fahrzeuginnenverkleidungsteils vorzuschlagen. Der Erfindung liegt ferner die Aufgabe zugrunde ein Verfahren vorzuschlagen, das es ermöglicht Bauteile einfacher und/oder kostengünstiger herzustellen. Ferner ist es eine Aufgabe der Erfindung ein Verfahren vorzuschlagen, das Zykluszeiten zur Herstellung eines Fahrzeuginnenverkleidungsteils mit zumindest einem funktionellen und/oder dekorativen Element, verringert. Darüber hinaus ist es eine Aufgabe der vorliegenden Anmeldung, ein entsprechend vorteilhaftes Fahrzeuginnenverkleidungsteil sowie ein entsprechend vorteilhaftes Werkzeug zur Herstellung eines Fahrzeuginnenverkleidungsteils vorzuschlagen.

Gelöst werden diese Aufgaben durch ein Verfahren mit den Merkmalen des Anspruchs 1 beziehungsweise durch ein Fahrzeuginnenverkleidungsteil und ein Werkzeug mit den Merkmalen nebengeordneter Ansprüche. Vorteilhafte Weiterbildungen ergeben sich mit den Merkmalen der abhängigen Ansprüche und der Ausführungsbeispiele.

Bei dem vorgeschlagenen Verfahren zum Herstellen eines ein Trägerteil und ein Kunststoffelement aufweisenden Fahrzeuginnenverkleidungsteils wird zunächst ein Werkzeug bereitgestellt. Das Werkzeug umfasst zumindest eine Auftragseinheit zum Auftragen eines flüssigen härtbaren Kunststoffes und eine Aufnahmevorrichtung mit einer Aufnahmeoberfläche zum Aufnehmen eines Trägerteils. Das Trägerteil wird vorzugsweise vorab durch ein Verfahren gefertigt, das eine Fertigung von relativ großen Teilen in großen Mengen und zu geringe Kosten ermöglicht. Zu diesen Verfahren zählt beispielsweise Spritzgießen. Die Aufnahmeoberfläche weist vorzugsweise Metall, besonders vorzugsweise Stahl, auf. Ferner sind die Auftragseinheit und die Aufnahmevorrichtung relativ zueinander bewegbar. Die Auftragseinheit und/oder die Aufnahmevorrichtung können/kann entlang von zumindest zwei, vorzugsweise zumindest drei Achsen, bewegbar sein und/oder um zumindest eine, vorzugsweise um zumindest zwei Achsen rotierbar sein. Typischerweise ist dabei die Aufnahmevorrichtung statisch und die Auftragseinheit kann über mehrere Achsen, vorzugsweise um fünf Achsen, relativ zur Aufnahmevorrichtung, beispielsweise mittels eines Industrieroboters, bewegbar sein. Auch ist möglich, dass die Aufnahmevorrichtung über eine oder mehrere Achsen bewegbar ist. Dabei kann unter bewegbar eine translatorische und/oder eine rotatorische Bewegung zu verstehen sein.

Das Trägerteil hat eine Vorderseite und eine Rückseite. Das Trägerteil kann gebogen sein. Das Trägerteil kann flexibel sein. Die Vorderseite und/oder die Rückseite können/kann ferner gewölbt und/oder gekrümmt sein. Ferner kann das Trägerteil Materialien wie Kunststoff, insbesondere PP oder ABS aufweisen oder aus diesen bestehen, und/oder Naturmaterialien wie Holz oder Metalle wie beispielsweise Aluminium umfassen. Alternativ oder zusätzlich kann das Trägerteil Glas, Stein, ein Gewebe oder einen Faserstoff aufweisen oder aus diesen bestehen. Das Trägerteil kann Verbundwerkstoffe aufweisen, zum Beispiel Polypropylen mit Naturfasern (NFPP) oder ein Textilverbundstoff.

In einem weiteren Prozessschritt wird das Trägerteil auf die Aufnahmeoberfläche derart gelegt, dass die Vorderseite des Trägerteils auf der Aufnahmeoberfläche zumindest bereichsweise aufliegt. Das eingelegte Trägerteil kann so von der Aufnahmeoberfläche gehalten bzw. gestützt werden. Vorzugsweise weist die Aufnahmeoberfläche eine Aussparung auf, in die das Trägerteil eingelegt wird, sodass es gegen Verrutschen gesichert ist. Das Trägerteil kann aber auch durch Wölbungen oder anderweitige Formen der Aufnahmeoberfläche und/oder durch Unterdruck auf der Aufnahmeoberfläche orientiert, positioniert und/oder gehalten werden. Dabei korrespondiert die Form der Aufnahmeoberfläche vorzugsweise zumindest bereichsweise mit der Form der Vorderseite des Trägerteils. Die Aufnahmeoberfläche ist dabei typischerweise gekrümmt. Unter gekrümmt ist dabei eine Oberfläche zu verstehen, die nicht ausschließlich planar verläuft, sondern Vertiefungen und Erhebungen aufweisen kann. Diese Vertiefungen und Erhebungen korrespondieren vorzugsweise zumindest bereichsweise mit einer Oberflächenform des Trägerteils. Ist dieses Trägerteil gebogen und/oder weist das Trägerteil eine gewölbte Oberfläche auf, kann es vordefiniert auf der Aufnahmeoberfläche positioniert und/oder orientiert werden.

Die Aufnahmeoberfläche kann zumindest bereichsweise strukturiert sein. Insbesondere dann kann der flüssige härtbare Kunststoff zumindest bereichsweise auf eine Außenkante des Trägerteils und zumindest teilweise auf die strukturierte Aufnahmeoberfläche zum Bilden des mit dem Trägerteil verbundenen Kunststoffteils derart aufgetragen werden, dass das Kunststoffelement eine strukturierte Oberfläche aufweist, die mit der strukturierten Aufnahmeoberfläche korrespondiert. Korrespondiert heißt dabei insbesondere, dass die strukturierte Oberfläche des Kunststoffelements eine Negativform der strukturierten Aufnahmeoberfläche darstellt, der flüssige Kunststoff formt die strukturierte Aufnahmeoberfläche also typischerweise ab. Dabei ist die strukturierte Oberfläche vorzugsweise als Negativ einer Vorlagenoberfläche ausgebildet, sodass eine Abformung der strukturierten Oberfläche wiederum der Vorlagenoberfläche entspricht.

Unter strukturiert ist hier insbesondere zu verstehen, dass die Oberfläche Vertiefungen in Form von Mulden, Rillen und/oder Furchen aufweist, die typischerweise Tiefen von mindestens 10 µm, vorzugsweise minimal 50 µm und/oder maximal 500 µm, vorzugsweise maximal 100 µm aufweisen. Beim Auftragen des flüssigen härtbaren Kunststoffes auf die strukturierte Oberfläche dringt der Kunststoff in die Mulden, Rillen und/oder Furchen der strukturierten Oberfläche ein. Nach einem Härten des Kunststoffes bildet der Kunststoff ein verfestigtes Negativ der strukturierten Oberfläche und weist selbst eine strukturierte Oberfläche auf. So können Muster, Maserungen und/oder Oberflächenrauigkeiten der Vorlagenoberfläche nachgebildet werden, insbesondere können Oberflächen natürlicher Materialien, beispielsweise von Holz, Stein und/oder Leder als Vorlagenoberfläche dienen. Durch eine strukturierte Oberfläche zumindest eines Kunststoffelements kann somit ein besonders dekoratives Fahrzeuginnenverkleidungsteil geschaffen werden.

In einer möglichen Ausführung kann ein Durchgangsloch und/oder eine Durchgangsbohrung, das bzw. die durch das Trägerteil verläuft, mit einem Kunststoffelement gefüllt werden. Eine Oberfläche des so aufgetragenen Kunststoffelements kann ferner wie oben beschrieben auf der Vorderseite des Fahrzeuginnenverkleidungsteils eine strukturierte, dekorative Oberfläche aufweisen. Dazu kann die Aufnahmeoberfläche in einem Bereich, der von der Außenkante des Durchgangsloches bzw. der Durchgangsbohrung des auf der Aufnahmeoberfläche platzierten Trägerteils umrandet wird, die oben beschriebene strukturierte Oberfläche aufweisen. Beim Auftragen des flüssigen härtbaren Kunststoffes in das Durchgangsloch bzw. in die Durchgangsbohrung dringt der Kunststoff in die Mulden, Rillen und/oder Furchen der strukturierten Oberfläche ein. Nach einem Härten des Kunststoffes bildet der Kunststoff ein verfestigtes Negativ der strukturierten Oberfläche. Auch ist es möglich, einen Rahmen zu fertigen, der stoffschlüssig mit dem Trägerteil verbunden ist und auf der Vorderseite des Fahrzeuginnenverkleidungsteils eine strukturierte Oberfläche aufweist, die an der Vorderseite des Trägerteils anliegt. Die strukturierte Oberfläche des Rahmens wird wie oben beschrieben durch Auftragen des flüssigen härtbaren Kunststoffes auf eine strukturierte Oberfläche der Aufnahmeoberfläche geschaffen. Ein derartiger Rahmen ist ein typisches Beispiel für ein funktionelles Element, das gleichzeitig dekorativ ist.

Zum generativen Fertigen zumindest eines mit dem Trägerteil stoffschlüssig verbundenen Kunststoffelements wird der flüssige härtbare Kunststoff zumindest bereichsweise auf eine Trägerteiloberfläche aufgetragen. Die Trägerteiloberfläche kann beispielsweise eine Seitenfläche, eine Kante und/oder die Rückseite umfassen oder sein. Liegt das Trägerteil nicht vollständig mit seiner Vorderseite auf der Aufnahmeoberfläche auf, kann die Trägeroberfläche, auf die der flüssige oder härtbare Kunststoff aufgetragen wird, auch Bereiche der Vorderseite des Trägerteils umfassen oder bilden.

Nach einem Auftragen des Kunststoffes härtet dieser aus. Dabei kann unter Härten sowohl ein Erstarren als auch ein allgemeines Verfestigen oder Verdichten zu verstehen sein. Der aufgetragen Kunststoff kann beispielsweise durch Abkühlung, durch Verdunstung eines Lösemittels, durch eine chemische Reaktion zweier Komponenten, durch eine Polymerisierung, zum Beispiel ein Polymerisierung durch UV Strahlung, und/oder eine Sinterung aushärten.

Das durch das Kunststoffelement und das Trägerteil geformte Fahrzeuginnenverkleidungsteil kann, vorzugsweise nach dem Härten des Kunststoffs, aus dem Werkzeug entnommen werden.

Das Trägerteil kann separat hergestellt werden und kann beispielsweise spritzgegossen sein. Dies ermöglicht eine schnelle Herstellung des Trägerteils. Die Kunststoffelemente werden in dem vorgeschlagenen Verfahren generativ auf das Trägerteil aufgebracht. Das vorgeschlagene Verfahren hat somit den Vorteil, dass Zykluszeiten verkürzt werden. Insbesondere werden so Prozesszeiten gegenüber der generativen Fertigung eines gesamten Fahrzeuginnenverkleidungsteils reduziert. Ferner ist ein Kostenaufwand für einen komplexen Formenbau minimiert, da die komplexen Formen der Kunststoffelemente generativ aufgebracht werden. Die Kunststoffelemente können beispielsweise Haken, Vorsprünge zum Fixieren des Fahrzeuginnenverkleidungsteil, jegliche Halteelemente, Aufnahmeelemente für elektronische Bauteile - beispielsweise Schalter, Displays oder Lichter -, Rahmen oder andere dekorative Elemente sein. Klammerverbindungen, Clips, Versteifungsstrukturen und/oder Verschraubungspunkte sind weitere typische Kunststoffelemente. Derartige elektronische Bauteile und/oder weitere Bauteile, die durch die Kunststoffelemente an dem Trägerteil fixiert werden sollen, können vorzugsweise bereits vor der additiven Fertigung des Kunststoffteils/der Kunststoffteile in oder am Trägerteil positioniert sein. Ferner sind dekorative Kunststoffelemente in Form von Stopfen und/oder Verzierungen von Löchern im und/oder Kanten am Trägerteil denkbar. Insbesondere Durchgangslöcher, die an der Vorderseite des Trägerteils sichtbar sind, können mit Kunststoffelementen verziert und/oder gestopft werden.

Das Kunststoffelement kann stoffschlüssig mit dem Trägerteil verbunden sein. Insbesondere kann eine direkte stoffschlüssige Verbindung zwischen einem Material des Trägerteils und einem Material des Kunststoffelements erzeugt werden. Es kann aber auch eine mittelbare stoffschlüssige Verbindung, beispielsweise über eine oder mehrere Schichten bestehen, die auf das Trägerteil aufgetragen wurden und auf die wiederum das Kunststoffelement aufgetragen wird. So kann beispielsweise ein Klebemittel zumindest bereichsweise auf die Trägerteiloberfläche aufgebracht werden, und auf den oder die derart gebildeten Bereiche mit Klebemittel kann/können ein oder mehrere Kunststoffelemente generativ aufgetragen werden. Dies hat insbesondere den Vorteil, dass auch in Bereichen des Trägerteils, die Materialien wie Holz oder Aluminium aufweisen, eine stoffschlüssige Verbindung zwischen dem Kunststoffelement und dem Trägerteil gebildet werden kann. Für eine verbesserte Haftung des Kunststoffelements kann die Oberfläche des Trägerteils zumindest bereichsweise mit beispielsweise Flammen oder Plasma bearbeitet werden. Alternativ oder zusätzlich kann durch Aufrauhung die Haftung verbessert werden und/oder es kann ein Haftprimer angewendet werden.

Der flüssige härtbare Kunststoff kann schichtweise, insbesondere durch ein additives Fertigungsverfahren, beispielsweise ein FDM-Verfahren oder durch 3D-Druck, aufgetragen werden. Dabei kann der flüssige härtbare Kunststoff tröpfchenweise oder strangweise aufgetragen werden.

Ein schichtweises Auftragen kann beispielsweise durch Auftragen eines mäanderförmigen Strangs oder durch Auftragen mehrerer parallelverlaufender Stränge des flüssigen härtbaren Kunststoffs nebeneinander in einer Ebene erfolgen. Erfolgt das Auftragen tröpfchenweise, so können zunächst die Tröpfchen nebeneinander in einer Ebene aufgetragen werden, sodass sich diese auf dem Trägerteil zunächst zu einem Strang oder zu mehreren Strängen verbinden. Die Tröpfchen können dabei so angeordnet werden, dass der aus den Tröpfchen gebildete Strang einer Mäanderform aufweist oder dass mehrere Stränge parallel verlaufen. Die Stränge können wiederum derart nebeneinander angeordnet sein, dass sich diese zu einer Schicht verbinden. Auf diese Art und Weise können mehrere Schichten übereinander aufgetragen werden. Der flüssige härtbare Kunststoff kann dabei zumindest noch nicht vollständig ausgehärtet sein oder durch die Wärme des aufgetragenen heißen flüssigen Kunststoffes angeschmolzen werden, sodass sich die Schichten und/oder Tröpfchen und/oder Stränge miteinander verbinden.

In einer bevorzugten Ausführung bildet das Kunststoffelement einen Rahmen, der das Trägerteil zumindest teilweise umrandet. Der Rahmen kann dabei an einer Vorderseite eine strukturierte Oberfläche aufweisen, die durch das oben beschriebene Verfahren gebildet wird. Dabei weist die Aufnahmeoberfläche vorzugsweise eine Rinne auf, die entlang einer äußeren Kante des auf der Aufnahmeoberfläche angeordneten Trägerteils verläuft. Eine Innenseite der Rinne weist vorzugsweise die strukturierte Oberfläche auf. Der flüssige härtbare Kunststoff kann in der Rinne entlang der äußeren Kante des Trägerteils schichtweise aufgetragen werden, sodass der Rahmen gebildet wird, der stoffschlüssig mit dem Trägerteil verbunden ist. Der flüssige härtbare Kunststoff kann dabei die strukturierte Oberfläche abformen, sodass der Rahmen an der Vorderseite des Trägerteils eine strukturierte Oberfläche aufweist.

Ein Kunststoffelement kann alternativ oder zusätzlich auch an der Rückseite des Trägerteils angeordnet sein. Insbesondere bei Kunststoffelementen, die als Halteelemente (beispielsweise Haken oder Stifte) ausgebildet sind und die an der Vorderseite nicht sichtbar sein sollen, ist ein Anordnung der Kunststoffelemente an der Rückseite des Trägerteils bevorzugt.

Der flüssige härtbare Kunststoff ist typischerweise ein Thermoplast, vorzugsweise Polypropylen oder Acrylnitril-Butadien-Styrol. Der flüssige härtbare Kunststoff kann aus dem gleichen Material bestehen oder das gleiche Material aufweisen wie das Trägerteil. Vorzugsweise wird für die Halteelemente ein Kunststoff mit entsprechenden mechanischen Eigenschaften angewendet. Für einen strukturierten Rand kann ein dünnflüssiger härtbarer Kunststoff bevorzugt werden, der leicht in die strukturierte Oberflache des Aufnahmeteils fließt.

Das Werkzeug zum Herstellen eines Fahrzeuginnenverkleidungsteils umfasst zumindest eine Auftragseinheit zum Ausbringen des flüssigen härtbaren Kunststoffes und eine Aufnahmevorrichtung zum Aufnehmen eines dreidimensionalen Trägerteils.

Die Auftragseinheit umfasst typischerweise eine Düse und/oder einen Extrudierkopf zum Auftragen des flüssigen härtbaren Kunststoffes. Üblicherweise wird eine Düse und/oder ein Extrudierkopf mit einer fixierten runden Austrittsöffnung angewendet. Der Durchmesser der Austrittsöffnung, durch die der flüssige härtbare Kunststoff aus der Düse und/oder dem Extrudierkopf austritt, kann veränderbar sein, beispielsweise durch eine Irisblende. Zusätzlich oder alternativ können/kann die Düse und/oder der Extrudierkopf verschiedene Querschnitte der Austrittsöffnung aufweisen, beispielsweise kann die Austrittsöffnung dreieckig, oval, rechteckig oder quadratisch sein.

Mittels des oben beschriebenen Verfahrens und/oder mit dem oben beschriebenen Werkzeug kann ein Fahrzeuginnenverkleidungsteil hergestellt werden. Es können zusätzliche Verfahrensschritte vorgesehen sein. Typischerweise ist das Fahrzeuginnenverkleidungsteil ein Armaturenbrett, eine Fahrzeugtürverkleidung oder eine Mittekonsole. Die oben beschriebenen Merkmale können dabei auch Merkmale des Fahrzeuginnenverkleidungsteils sein. Insbesondere kann mit dem oben beschriebenen Verfahren ein Fahrzeuginnenverkleidungsteil hergestellt werden, das ein Trägerteil und einen das Trägerteil zumindest bereichsweise umrandenden, mit dem Trägerteil stoffschlüssig verbundenen Rahmen, umfasst. Dabei hat das Fahrzeuginnenverkleidungsteil typischerweise eine Vorderseite und der Rahmen weist an der Vorderseite bevorzugt eine strukturierte Oberfläche auf. Zusätzlich oder alternativ kann das Fahrzeuginnenverkleidungsteil an der Rückseite Kunststoffelemente, beispielsweise Haken und/oder Vorsprünge, beispielsweise zum Fixieren des Fahrzeuginnenverkleidungsteils, aufweisen.

Ausführungsbeispiele werden nachfolgend anhand von Abbildungen beschrieben. Es zeigen
- Fig. 1a: einen Querschnitt eines Werkzeugs mit einem eingelegten Trägerteil mit Kunststoffelementen,
- Fig. 1b: einen Querschnitt des Werkzeugs mit einem eingelegten Trägerteil mit Kunststoffelementen,
- Fig. 2a: einen Querschnitt eines Werkzeugs und einen vergrößerten Ausschnitt einer strukturierten Oberfläche,
- Fig. 2b: einen Querschnitt eines Werkzeugs und einen vergrößerten Ausschnitt einer strukturierten Oberfläche,
- Fig. 2c: einen Querschnitt eines Werkzeugs und einen vergrößerten Ausschnitt einer strukturierten Oberfläche,
- Fig. 3a: einen Querschnitt des Werkzeugs der Figur 2 mit verschiedenen Trägerteilen,
- Fig. 3b: einen Querschnitt des Werkzeugs der Figur 3a mit bewegbarer Aufnahmeoberfläche,
- Fig.3c: einen Querschnitt des Werkzeugs der Figur 3b mit bewegbarer Aufnahmeoberfläche,
- Fig. 4: eine Austrittsöffnung einer Düse mit einer Irisblende,
- Fig. 5: Querschnitte einer Austrittsöffnung einer Düse und
- Fig. 6: einen Industrieroboter zum Bewegen der der Düse.

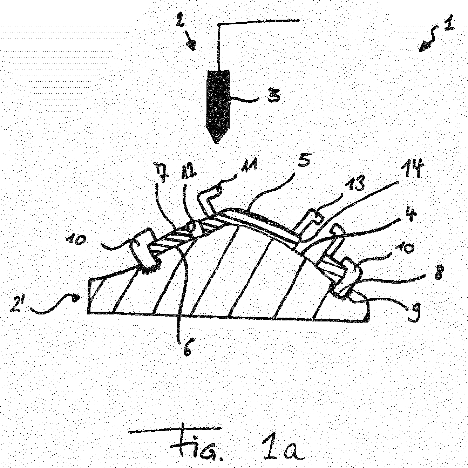

Figur 1a zeigt ein Werkzeug 1 zum Herstellen eines Fahrzeuginnenverkleidungsteils. Das Werkzeug 1 umfasst eine Auftragseinheit 2 zum Auftragen eines flüssigen härtbaren Kunststoffes, aus dem Kunststoffelemente nach dem Prinzip des FDM gebildet werden können. Die Auftragseinheit 2 umfasst dazu eine bewegbare Düse 3, durch die der flüssige härtbare Kunststoff gezielt aufgetragen werden kann. Ferner umfasst das Werkzeug 1 eine Aufnahmevorrichtung 2' mit einer Aufnahmeoberfläche 4, auf der ein Trägerteil 5, aufweisend eine Vorderseite 6 und eine Rückseite 7, angeordnet ist. Die Aufnahmeoberfläche 4 ist gekrümmt und korrespondiert mit der Form der Vorderseite 6, sodass das Trägerteil verrutschsicher auf der Aufnahmeoberfläche angeordnet ist. Die Aufnahmeoberfläche 4 weist eine Rinne 8 auf, die das Trägerteil umrandet. Eine Oberfläche 9 der Rinne 8 ist derart strukturiert ausgebildet, dass sie eine Negativform einer Holzoberflächenstruktur abbildet. Dabei sind auf der Oberfläche 9 Furchen mit einer Tiefe zwischen 50 und 100 µm, zum Beispiel 70 µm ausgebildet. Die Oberfläche 9 ist dabei aus Stahl. Auf dem Trägerteil 5 sind Kunststoffelemente angeordnet, die mittels FDM durch die Düse 3 generativ auf das Trägerteil 5 aufgetragen wurden. Dabei wurde die Düse 3 mittels eines Industrieroboters über fünf Achsen relativ zum Trägerteil 5 und zur Aufnahmeoberfläche 4 bewegt. Eines der aufgetragenen Kunststoffelemente ist ein Rahmen 10, der mit dem Trägerteil 5 stoffschlüssig verbunden ist. Zum Bilden des Rahmens 10 wurde ein flüssiger härtbarer Kunststoff in die das Trägerteil 5 umlaufende Rinne 8 schichtweise derart aufgetragen, dass der Rahmen das Trägerteil 5 an Außenkanten des Trägerteils 5 sowie teilweise an der Rückseite 7 des Trägerteils 5 umschließt und die Rinne 8 ausfüllt. In den Bereichen, in denen der flüssige härtbare Kunststoff des Rahmens 10 das Trägerteil 5 berührt, ist der Rahmen 10 stoffschlüssig mit dem Trägerteil 5 verbunden. Nach dem Härten des Kunststoffes kann das das Trägerteil und das generativ aufgetragene Kunststoffelement aufweisende Fahrzeuginnenverkleidungsteil aus dem Werkzeug 1 entnommen werden. Der Rahmen 10 weist in den Bereichen, in denen der beim Auftragen flüssige Kunststoff in Kontakt mit der strukturierten Oberfläche 9 kam, eine strukturierte Oberfläche auf, die einer Abformung der strukturierten Oberfläche 9 entspricht. In diesen Bereichen weist der Rahmen 10 somit eine Holzmaserung auf. Auf dem Trägerteil 5 ist ferner ein Haltelement in Form eines Hakens 11 angeordnet. Der Haken 11 wurde ebenso wie der Rahmen 10 generativ gefertigt, indem mittels FDM durch die Düse 3 flüssiger härtbarer Kunststoff schichtweise aufgetragen wurde. Zudem wurde eine Durchgangsbohrung 12 im Trägerteil 5 mit flüssigem härtbaren Kunststoff gefüllt. Ein weiteres Halteelement 13 wurde wie der Haken 11 generativ auf der Rückseite 7 des Trägerteils 5, umrandend eine Öffnung 14, aufgetragen. Hinter der Öffnung 14 des Trägerteils 5 kann so beispielsweise ein Display angebracht und von dem Halteelement 13 gehalten werden. Das Display wird dabei vom Halteelement 13 relativ zum Trägerteil fixiert und kann durch die Öffnung 14 von Vorderseite aus abgelesen oder auch - wenn es sich bei dem Display um einen Touchscreen handelt - bedient werden.

Das Trägerteil 5 ist aus PP und der flüssige härtbare Kunststoff ist ABS. Das Trägerteil kann auch aus einem anderen Material sein und/oder ein anderes Material umfassen. Der flüssige härtbare Kunststoff kann auch ein anderes Material sein, beispielsweise PP. Die gezeigte Materialkombination hat den Vorteil, dass sich der flüssige Kunststoff beim Auftragen stoffschlüssig mit dem Trägerteil verbindet. Ist das Trägerteil beispielsweise aus Holz, Glas oder Aluminium, wird vor dem Auftrag des Kunststoffes ein Klebemittel aufgebracht, solch ein Klebemittel weist beispielsweise Polyamide auf. Anschließend wird der Kunststoff auf das Klebemittel aufgetragen, sodass eine stoffschlüssige Verbindung zwischen dem Kunststoff und dem Klebemittel entsteht. Das Klebemittel kann beispielsweise eine Haftprimer oder eine Klebefolie sein.

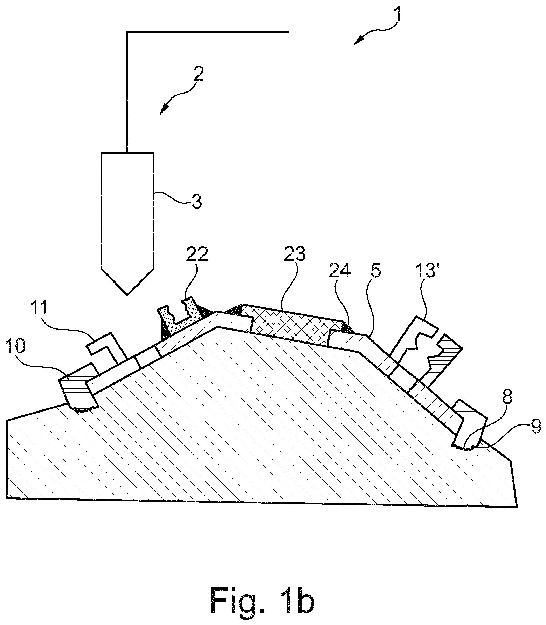

Figur 1b zeigt im Wesentlichen das Werkzeug der Figur 1a zum Herstellen eines Fahrzeuginnenverkleidungsteils. Das Fahrzeuginnenverkleidungsteil weist ebenso wie das Fahrzeuginnenverkleidungsteil der Figur 1a ein Trägerteil 5 sowie Kunststoffelemente in Form eines Hakens 11, eines Rahmens 10 und eines Halteelements 13' auf. Das Trägerteil 5 ist nicht einstückig mit den Kunststoffelementen ausgeführt. Vielmehr wurde das Trägerteil 5 vor dem additiven Aufbringen der Kunststoffelemente gefertigt und separat in das Werkzeug 1 eingelegt. Das Halteelement 13' weist eine Form mit Hinterschneidungen auf, sodass es nur mittels additiver Fertigung hergestellt werden kann. Ferner ist ein Gewindeelement 22 mit dem Trägerteil 5 verbunden. Das Gewindeelement 22 kann additiv gefertigt sein oder durch additive Fertigung und/oder durch ein Klebemittel mit dem Trägerteil verbunden sein. Im gezeigten Beispiel ist ferner ist ein Display 23 vorgesehen, der bereits vor dem Aufbringen von Kunststoffelementen durch additive Fertigung auf dem Trägerteil 5 angeordnet wurde. Ein Kunststoffelement, hier in Form eines Displayhalters 24, kann das Display mit dem Trägerelement 5 formschlüssig verbinden.

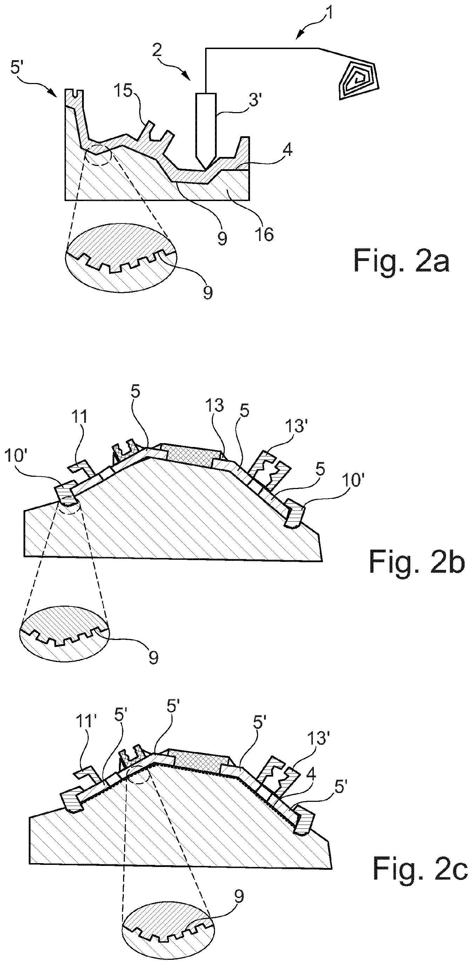

Fig. 2a zeigt ein Werkzeug, das im Wesentlichen dem Werkzeug der Fig. 1 entspricht, wobei die Aufnahmeoberfläche 4 eine andere Form aufweist. In dieser und den folgenden Figuren werden wiederkehrende Merkmale mit identischen Bezugszeichen versehen. Die Aufnahmeoberfläche 4 ist ferner nicht wie in Figur 1 bereichsweise, sondern vollständig als strukturierte Oberfläche 9 ausgebildet. Dies ist in dem vergrößerten Ausschnitt der Figur 2 dargestellt. Auf der Aufnahmeoberfläche 4 ist im Gegensatz zur Figur 1 kein separat hergestelltes Trägerteil angeordnet. Vielmehr wird der flüssige härtbare Kunststoff direkt auf die Aufnahmeoberfläche 4 aufgebracht und bildet selbst ein Trägerteil 5'. Dabei wird der flüssige härtbare Kunststoff strangweise zunächst nebeneinander zum Ausbilden einer ersten Schicht aufgetragen. Der Kunststoff kann auch tröpfchenweise aufgetragen werden. Zum Bilden einer weiteren Schicht werden auf der ersten Schicht weitere Kunststoffstränge nebeneinander angeordnet. Im gezeigten Beispiel wird der Kunststoff durch einen Extrudierkopf 3' extrudiert. Der Extrudierkopf 3' weist dabei eine kreisrunde Austrittsöffnung auf, sodass die extrudierten Kunststoffstränge eine im Wesentlichen kreisrunde Form haben. Das derart generativ gefertigte Trägerteil 5' weist Bereiche unterschiedlicher Dicke sowie Funktionselemente, beispielsweise einen Befestigungsclip 15, auf. Alternativ kann der Befestigungsclip ein anderes Material aufweisen als das Trägerteil und kann auf das Trägerteil aufgetragen werden. Die Trägerteildicke und auch die Form der Funktionselemente werden dabei, wie allgemein bei generativen Fertigungsverfahren bekannt, durch eine bereichsweise unterschiedliche Anzahl aufgetragener Schichten gebildet. Nach einem Härten des Kunststoffes wird das Fahrzeuginnenverkleidungsteil mit dem Trägerteil 5' und dem Befestigungsclip 15 aus dem Werkzeug 1 entnommen. Das Trägerteil 5' weist an seiner Oberfläche 16 eine Strukturierung auf, die mit der strukturierten Oberfläche 9 der Aufnahmeoberfläche korrespondiert, also dem Negativ der Aufnahmeoberfläche 9 entspricht. Das Material des Trägerteils und das Material des Kunststoffelements können mit unterschiedlichen Düsen gefertigt werden. Beispielsweise wird für die Fertigung des Trägerteils typischerweise eine Düse mit einer größeren Austrittsöffnung angewendet, die schneller bewegt werden kann als die Düse für die Fertigung des Kunststoffelements.

Figur 2b zeigt ein Werkzeug das im Wesentlichen der Figur 2a entspricht. Ein Trägerteil 5 ist (im Gegensatz zu dem Trägerteil das in das Werkzeug der Figur 2a eingelegt ist) separat gefertigt. Im gezeigten Beispiel 2b ist das Trägerteil ein Kunststoffteil, beispielsweise aus PP, das nach seiner Fertigung in das Werkzeug 1 eingelegt wurde. Kunststoffelemente 10, 11, 13 und 13' wurden nachträglich mittels FDM auf das Trägerteil 5 schichtweise aufgebracht.

Figur 2c zeigt ein Werkzeug das im Wesentlichen der Figur 2b entspricht. Die Aufnahmeoberfläche 4 ist jedoch nicht wie in Figur 2b bereichsweise, sondern vollständig als strukturierte Oberfläche 9 ausgebildet. Ein Trägerteil 5' wurde additiv auf die Aufnahmeoberfläche 4 aufgebracht, sodass eine Vorderseite des Trägerteils 5' eine strukturierte Oberfläche aufweist. Ferner wurde ein Haltelement 13' mit Hinterschneidungen ebenfalls additiv auf das Trägerelement 5' aufgebracht. Ein Haken 11' wurde ebenfalls additiv, also schichtweise auf das Trägerteil aufgebracht.

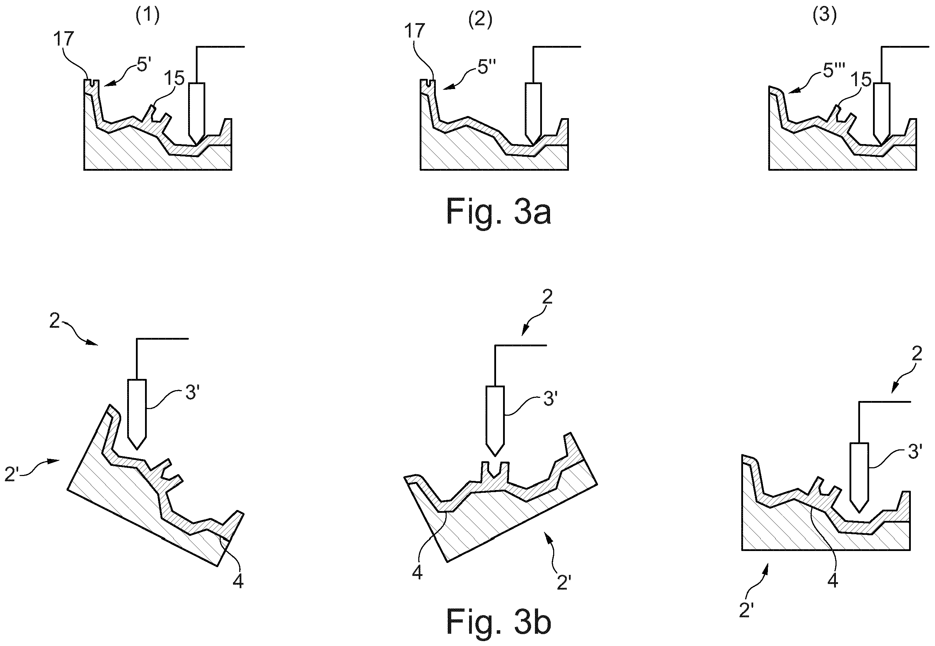

In Figur 3a ist das Werkzeug der Figur 2 gezeigt, mit dem Fahrzeuginnenverkleidungsteile mit verschiedenen Ausprägungen gefertigt werden können. Die Figuren 3a (1), (2) und (3) zeigen dabei jeweils dasselbe Werkzeug mit unterschiedlichen Ausprägungen der jeweils gefertigten Trägerteile 5', 5" und 5'". Das Trägerteil 5' entspricht dabei dem Trägerteil der Figur 2 und weist neben dem Befestigungsclip 15 ein Klammerteil 17 auf. Der Befestigunsclip 15 und das Klammerteil 17 sind dabei einstückig mit dem Trägerteil 5' ausgebildet. Das Trägerteil 5" weist kein Befestigungsclip 15, aber ein Klammerteil 17 auf. Auch hier ist das Klammerteil 17 einstückig mit dem Trägerteil 5" ausgebildet. Das Trägerteil 5'" weist nur den Befestigungsclip 15 auf. Figur 3b zeigt das Werkzeug der Figur 3a, wobei zusätzlich zur Auftragseinheit 2 auch die Aufnahmevorrichtung 2' um fünf Achsen mittels eines weiteren Industrieroboters relativ zur Auftragseinheit 2 bewegbar ist. Dies ist insbesondere vorteilhaft, wenn flüssige aushärtbare Kunststoffe verwendet werden, die ausschließlich in Richtung der Gravitationskraft definiert aufgetragen werden können ohne zu zerfließen.

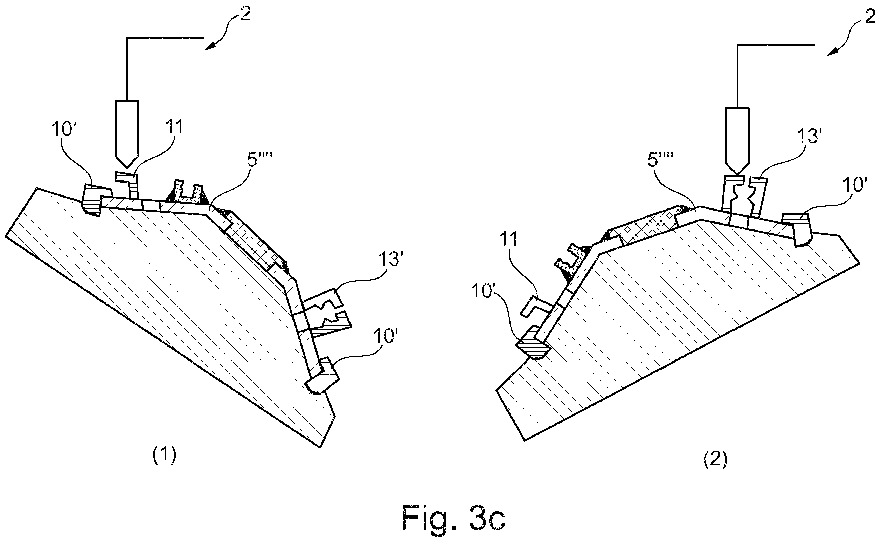

Figur 3c zeigt das Werkzeug der Figur 3b mit dem Fahrzeuginnenverkleidungsteile verschiedener Ausprägungen gefertigt werden können. Die Figuren 3c (1) und (2) zeigen dabei das Werkzeug mit einem Trägerteil 5"". Das Trägerteil 5"" ist dabei im Gegensatz zu dem Trägerteil der Figur 3a nicht einstückig mit den Kunststoffelementen 10' (Rahmen), 11 (Haken) und 13' (Halteelement) ausgebildet. Vielmehr zeigt Fig. 3c (1)eine Momentaufnahme kurz nach einer additiven Fertigung des Hakens 11, der auf das separat hergestellte Trägerteil 5"" aufgebracht wurde. Fig. 3c (2) zeigt eine Momentaufnahme kurz nach einer additiven Fertigung des Halteelements 13', das auf das Trägerteil 5"" aufgebracht wird. Das Trägerelement 5"" ist beispielsweise aus Glas. Vor einem Auftragen der Kunststoffelemente 10', 11 und 13' kann ein Klebemittel auf die entsprechenden Stellen, an denen die Kunststoffelemente 10', 11 und 13'des Trägerelements lokalisiert sind, aufgetragen werden. Die Kunststoffelemente 10', 11 und 13' können daraufhin schichtweise auf das Klebemittel oder direkt auf eine Trägeroberfläche additiv aufgetragen werden.

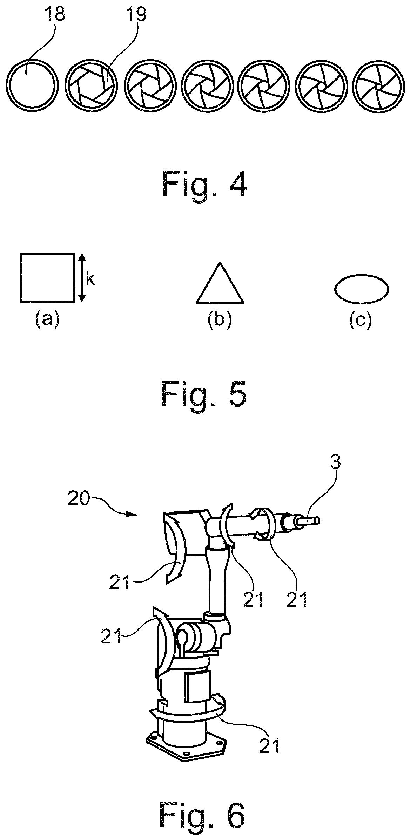

Figur 4 zeigt eine Irisblende in verschiedenen Einstellungen. Eine Austrittsöffnung 18 kann mittels Lamellen 19 stufenlos geöffnet und geschlossen werden. Mittels einer derartigen Irisblende kann eine Austrittsöffnung einer Düse 3 oder eines Extrudierkopfes 3' vergrößert oder verkleinert werden.

In Figur 5 sind drei verschiedene Querschnittsgeometrien gezeigt, die eine Austrittsöffnung einer Düse und/oder eines Extrudierkopfes 3' beispielsweise aufweisen kann. Dabei ist der Querschnitt in Figur 5 (a) quadratisch, in Figur 5 (b) dreieckig und in Figur 5 (c) oval. Das Quadrat der Figur 5 (a) weist dabei beispielsweise eine Kantenlänge K von 0,8 mm auf, das Dreieck der Figur 5 (b) hat beispielsweise eine Höhe H von 0,5 mm und das Oval weist beispielsweise eine Länge L von 7 mm auf. Ein Extrudierkopf 3' und/oder eine Düse 3 eines der oben beschriebenen Werkzeuge kann beispielsweise eine derartige Austrittsöffnungsform aufweisen. Ferner kann vorgesehen sein, dass die Querschnittsgeometrien der Austrittsöffnungen beispielsweise durch verschiedene Aufsätze veränderbar sind. Beispielsweise haben runde Austrittsöffnungen einen Durchmesser größer als 0,02 mm und kleiner als 5 mm.

Figur 6 zeigt einen Industrieroboter 20, an dessen Arm eine Düse 3 angeordnet ist. Der Industrieroboter 20 ist Teil eines der oben beschriebenen Werkzeuge und Teil der Auftragseinheit 2. Die Düse 3 ist in fünf Richtungen 21 bewegbar und kann so jegliche Bewegung realisieren. So können Kunststoffelemente mit Hinterschneidungen und komplexe Formen additiv gefertigt werden.

Es sei angemerkt, dass in der vorliegenden Anmeldung die Begriffe additive Fertigung, 3D Druck und generative Fertigung als Synonyme verwendet werden.

Lediglich in den Ausführungsbeispielen offenbarte Merkmale der verschiedenen Ausführungsformen können miteinander kombiniert und einzeln beansprucht werden.

## Patentansprüche

1. Verfahren zum Herstellen eines ein Trägerteil und ein Kunststoffelement aufweisenden Fahrzeuginnenverkleidungsteils, umfassend folgende Schritte
- Bereitstellen eines Werkzeugs (1) umfassend zumindest eine Auftragseinheit (2) zum Auftragen eines flüssigen härtbaren Kunststoffes und eine Aufnahmevorrichtung (2') mit einer Aufnahmeoberfläche (4) zum Aufnehmen eines Trägerteils (5) mit einer Vorderseite (6) und einer Rückseite (7), wobei die Auftragseinheit (2)und die Aufnahmevorrichtung (2') relativ zueinander bewegbar sind,
- Einlegen des Trägerteils (5) auf die Aufnahmeoberfläche (4) derart, dass die Vorderseite (6) des Trägerteils auf der Aufnahmeoberfläche (4) zumindest bereichsweise aufliegt,
- Zumindest bereichsweises, schichtweises Auftragen des flüssigen härtbaren Kunststoffes auf eine Trägerteiloberfläche derart, dass zumindest ein Kunststoffelement, das mit dem Trägerteil (5) stoffschlüssig verbunden ist, generativ gefertigt wird, und
- Härten des Kunststoffes.

2. Verfahren nach Anspruch 1, wobei vor dem Auftragen des flüssigen härtbaren Kunststoffes zumindest bereichsweise ein Klebemittel auf die Trägerteiloberfläche aufgebracht wird.

3. Verfahren nach einem der vorangehenden Ansprüche, wobei die Aufnahmeoberfläche (4) zumindest bereichsweise strukturiert ist und der flüssige härtbare Kunststoff zumindest bereichsweise auf eine Außenkante des Trägerteils und auf die strukturierte Aufnahmeoberfläche (9) zum Bilden des mit dem Trägerteil verbundenen Kunststoffteils derart aufgetragen wird, dass das Kunststoffelement eine strukturierte Oberfläche aufweist, die mit der strukturierten Aufnahmeoberfläche (9) korrespondiert.

4. Verfahren nach einem der vorangehenden Ansprüche, wobei der flüssige härtbare Kunststoff durch ein additives Fertigungsverfahren schichtweise aufgetragen wird.

5. Verfahren nach einem der vorangehenden Ansprüche, wobei der flüssige härtbare Kunststoff durch ein FDM-Verfahren aufgetragen wird.

6. Verfahren nach einem der vorangehenden Ansprüche, wobei der flüssige härtbare Kunststoff tröpfchenweise oder strangweise aufgetragen wird.

7. Verfahren nach einem der vorangehenden Ansprüche, wobei das Kunststoffelement einen Rahmen (10) bildet, der das Trägerteil (5) zumindest teilweise umrandet und/oder wobei das Kunststoffelement an der Rückseite (7) des Trägerteils (5) angeordnet ist.

8. Werkzeug (1) zum Herstellen eines Fahrzeuginnenverkleidungsteils umfassend eine Auftragseinheit (2) zum Ausbringen eines flüssigen härtbaren Kunststoffes und eine Aufnahmevorrichtung (2') zum Aufnehmen eines Trägerteils (5)wobei die Aufnahmeoberfläche gekrümmt und/oder zumindest bereichsweise strukturiert ist.

9. Werkzeug (1) nach Anspruch 8, wobei die Auftragseinheit (2) eine Düse (3) und/oder einen Extrudierkopf (3') aufweist.

10. Werkzeug (1) nach einem der Ansprüche 8 oder 9, wobei die Auftragseinheit (2) und/oder die Aufnahmevorrichtung (2') entlang von zumindest drei Achsen bewegbar sind/ist und/oder um zumindest eine, vorzugsweise um zumindest zwei Achsen rotierbar sind/ist.

11. Fahrzeuginnenverkleidungsteil, das mittels eines Verfahrens gemäß einem der Ansprüche 1 bis 7 und/oder in einem Werkzeug (1) gemäß einem der Ansprüche 8 bis 10 hergestellt wurde.

12. Fahrzeuginnenverkleidungsteil nach Anspruch 11, umfassend ein Trägerteil (5) und einen das Trägerteil (5) zumindest bereichsweise umrandenden, mit dem Trägerteil (5) stoffschlüssig verbundenen Rahmen (10), wobei das Fahrzeuginnenverkleidungsteil eine Vorderseite (6) hat und der Rahmen (10) an der Vorderseite (6) eine strukturierte Oberfläche aufweist.
